Europäisches Patentamt

European Patent Office

Office européen des brevets

(11) Publication number: **0 434 634 A2**

# EUROPEAN PATENT APPLICATION

(21) Application number: 90830533.7

(51) Int. Cl.[5]: **B60H 1/00**

(22) Date of filing: 19.11.90

(30) Priority: 18.12.89 JP 146292/89 U

(43) Date of publication of application:
26.06.91 Bulletin 91/26

(84) Designated Contracting States:
CH DE ES FR GB IT LI

(71) Applicant: S.K.G. ITALIANA S.r.l.
Via G. Di Vittorio, 78
I-43044 Lemignano di Collecchio (Parma) (IT)
Applicant: TGK CO. Ltd.
1211-4 Kunugidacho, Hachioji-shi
Tokyo (JP)

(72) Inventor: Hirota, Hisatoshi
1270-3, Narahara-cho
Hachioji-shi, Tokyo (JP)

(74) Representative: Lanzoni, Luciano
c/o BUGNION S.p.A. Viale Trento Trieste, 25
I-41100 Modena (IT)

(54) Apparatus for controlling the quantity of heat radiated from a car heater.

(57) The present invention relates to a control apparatus for controlling the quantity of heat radiated from a car heater which is designed to effect heating in the passenger compartment by means of the engine cooling water heated by the car engine. The control apparatus comprises a valve member (11) for controlling the flow rate of engine cooling water passing through a radiator and a motor actuator (100) driven by an electric motor to control the operation of said valve member (11).

FIG. 2

The present invention relates to control apparatus for controlling the quantity of heat radiated from a car heater which is designed to effect heating in the passenger compartment by means of the engine cooling water heated by the car engine. A typical car heater comprises a radiator for radiating heat into the passenger compartment which is connected to an intermediate portion of a duct for circulating engine cooling water. The quantity of heat radiated from the radiator is controlled by opening and closing a valve member provided in the duct by means of a so-called vacuum actuator that utilizes a vacuum generated in the engine.

However, the vacuum actuator requires complicated work for installation as it necessitates piping for taking out the vacuum from the engine, and it also involves the disadvantage that it is difficult to effect fine control needed to precisely control the quantity of heat radiated. Generally, engine cooling water is circulated through the duct by the action of a pump which is driven by the engine.

Accordingly, the flow rate of engine cooling water circulating between the radiator and the engine varies with the rotational speed of the engine even if the opening of the valve member provided in the duct remains unchanged, resulting in a change in the quantity of heat radiated from the radiator. Thus, the conventional control apparatus is incapable of finely and precisely controlling the quantity of heat radiated from the radiator of the car heater.

An object of the present invention is to provide a control apparatus for controlling the quantity of heat radiated from a car heater, which is simple and compact yet capable of precisely controlling the quantity of radiated heat.

Other objects and advantages of the present invention will become apparent from the following detailed description of illustrated embodiments of the invention.

According to the present invention, there is provided a control apparatus for controlling the quantity of heat radiated from a car heater having a duct through which engine cooling water heated in the engine circulates and a radiator connected to an intermediate portion of the duct to radiate heat into the passenger compartment, comprising : a valve member for opening and closing the duct for controlling the flow rate of engine cooling water passing through the radiator ; and a motor actuator driven by an electric motor to control operation of the valve member.

The present invention may be more fully understood from the description of preferred embodiments of the invention set forth below, together with the accompanying drawings, in which :

-fig 1 is a block diagram showing a heater system according to one embodiment of the invention ;
-fig 2 is a perspective view of control apparatus according to the embodiment ;
-fig 3 a plan view of the control apparatus ;
-fig 4 is a sectional view taken through IV-IV in fig 3 ;
-fig 5 is a sectional view taken through V-V fig 3 ;
-figs 6 and 7 are partly-sectional plan views showing the switching operation of the valve member employed in the embodiment ;
-fig 8 is a sectional side elevation of the motor actuator employed in the embodiment ;
-fig 9 is a block diagram showing the control circuit employed in the embodiment ;
-fig 10 is a sectional side elevation of a motor actuator employed in another embodiment ; and
-fig 11 is a perspective view of the rack of the motor actuator.

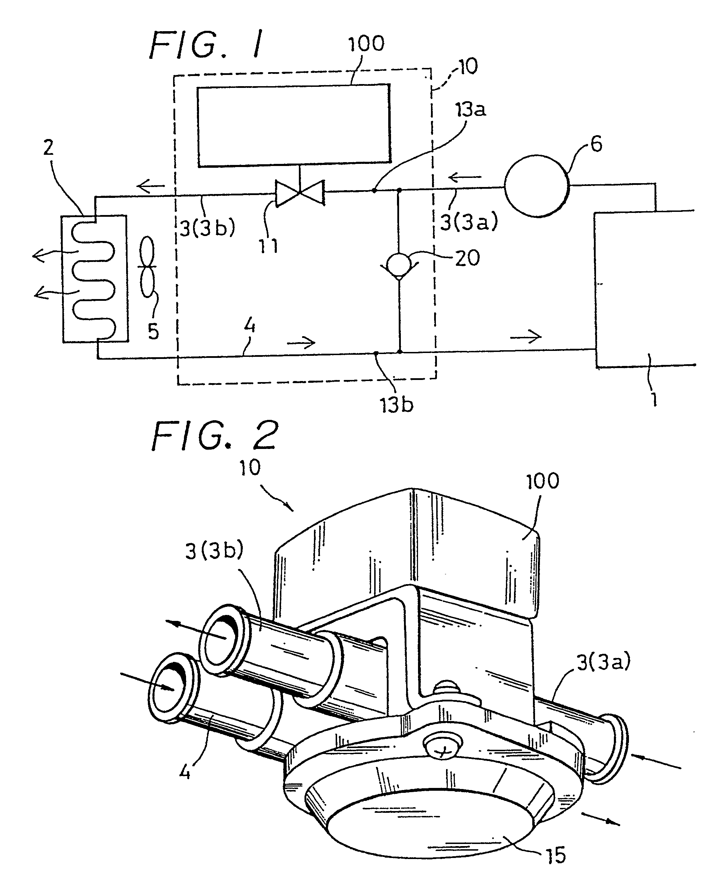

Referring first to fig 1, the reference numeral 1 denotes an automobile engine, and 2 a radiator disposed at a position which leads to the passenger compartment. Between the engine 1 and the radiator 2 are provided ducts 3 and 4 for circulating engine cooling water. The reference numeral 3 denotes a supply duct for sending engine cooling water to the radiator 2. The reference numeral 4 denotes a return duct for returning the engine cooling water from the radiator 2 to the engine 1.

The reference numeral 6 denotes a pump for circulating engine cooling water heated in the engine 1 through the ducts 3 and 4, the pump 6 being driven by the engine 1.

With this arrangement, engine cooling water heated in the engine 1 is passed through the radiator 2 and heat is radiated from the radiator 2 into the passenger compartment by the action of a fan 5. A control apparatus 10 for controlling the quantity of heat radiated from the radiator 2 is connected to an intermediate portion of the supply duct 3 which extends from the engine 1 to the radiator 2. The control apparatus 10 includes a valve member 11 which is connected to an intermediate portion of the supply duct 3 to open and close the duct 3. The degree of opening of the valve member 11 is controlled by a motor actuator 100 which is driven by an electric motor.

A constant differential pressure valve 20 is provided between the supply duct and the return duct 4 at a position which is closer to the engine 1 than the radiator 2 and the valve member 11. When the difference between the pressure of engine cooling water in the supply duct 3 at the inlet side of the valve member 11 and the pressure of engine cooling water in return duct 4 at the outlet side of the radiator 2 exceeds a predetermined level, the constant differential pressure valve 20 opens so that part of the engine cooling water is directly sent from the supply duct 3 to the return duct 4 without passing through the valve member 11 and the radiator 2. In consequence, the difference between the pressure of engine cooling water at the inlet side of the valve member 11 and that at the outlet side of the radiator 2 is maintained at a constant level at all times. The reference numerals 13a and 13b denote an inlet thermistor and an outlet thermistor for detecting the temperatures of engine cooling water in the supply and return ducts 3 and 4, respectively.

Figs 2 to 7 illustrate the control apparatus 10.

Fig 2 is a perspective view of the control apparatus 10, in which the reference numeral 15 denotes a valve chest incorporating the valve member 11. Between the valve chest 15 and the motor actuator 100 are disposed the two ducts 3 and 4. Accordingly, the extent to which the control apparatus 10 projects from the ducts 3 and 4 is small and the control apparatus 10 can therefore be formed in an exceedingly compact structure.

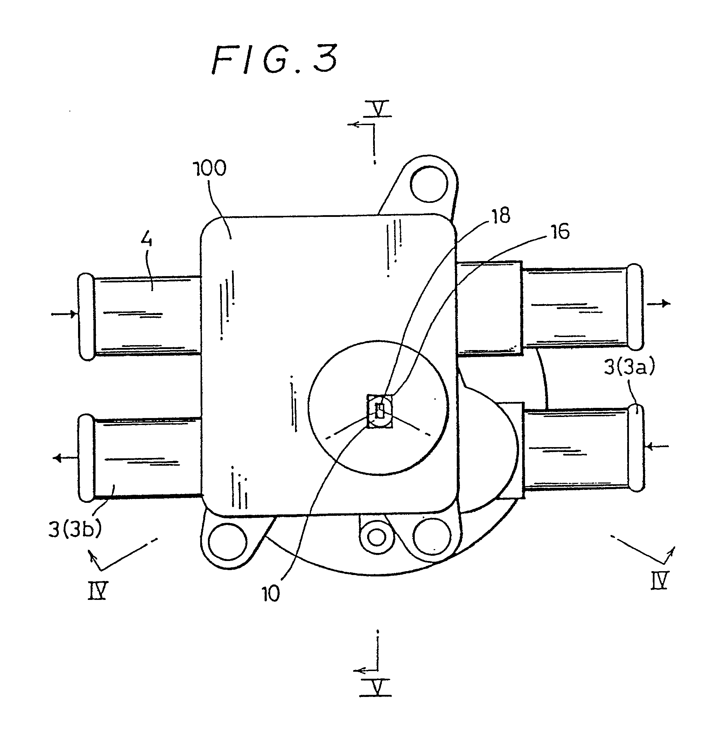

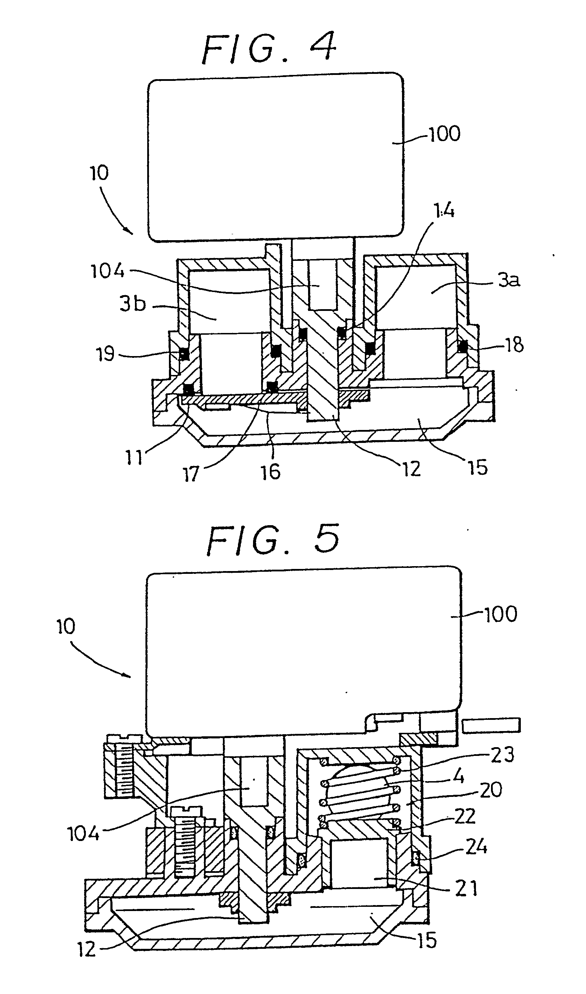

Fig 3 is a plan view of the control apparatus 10, and figs 4 and 5 are sectional views taken along the lines IV-IV and V-V respectively, of fig 3. The valve chest 15 is connected with the supply duct 3 in such a manner that the inlet 3a of the duct 3 is always in communication with the valve chest 15. The valve chest 15 and the outlet 3b of the supply duct 3 are selectively brought in and out of communication with each other by the valve member 11 that comprises a flat plate-shaped rotary valve.

The reference numeral 12 denotes a rotating shaft which is provided in such a manner as to rotate together with the valve member 11 in one unit, the shaft 12 begin driven by the motor actuator 100. The reference numeral 16 denotes a leaf spring which presses the valve member 11 against a valve seat 17 provided on the supply duct outlet 3b to thereby prevent leakage of engine cooling water. The reference numerals 14, 18 and 19 denote O-rings for sealing.

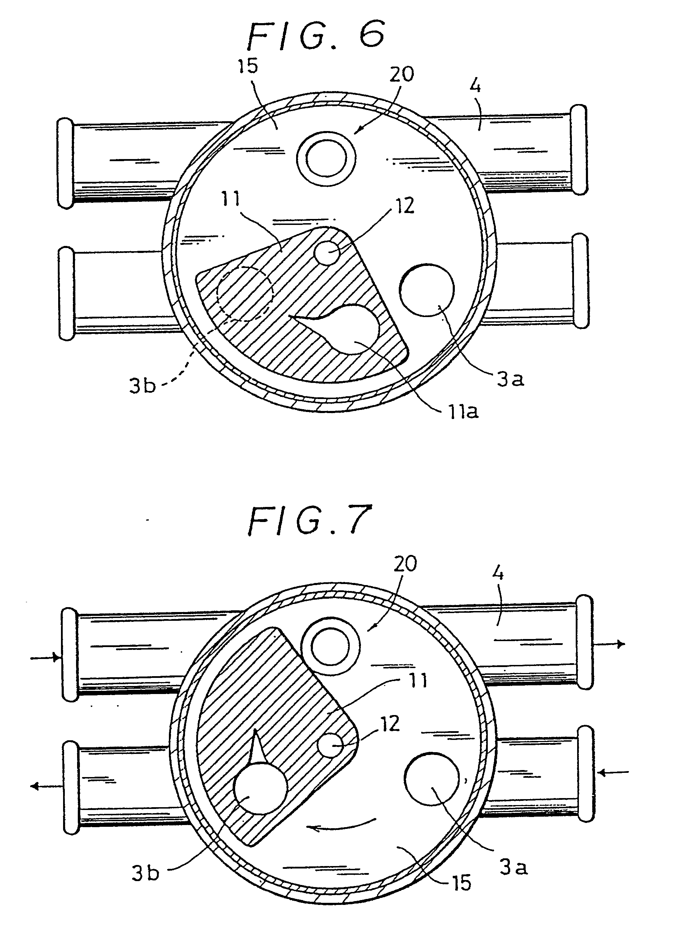

Accordingly, when the valve member 11 closes the supply duct outlet 3b, as shown in figs 4 and 6, engine cooling water does not circulate, whereas, when the valve member 11 rotates so as to provide communication between the valve chest 15 and the supply duct outlet 3b, as shown in fig 7, engine cooling water circulates and it is sent to the radiator 2. Within the range between the fully-closed position and fully-open position of the valve member 11, any desired flow rate of engine cooling water can be obtained in accordance with the degree of opening of the valve member 11 (i.e., the degree of opening of the supply duct outlet 3b).

The return duct 4 extends through the control apparatus 10 without being blocked by the valve member 11. More specifically, those portions of the return duct 4 respectively on the upstream and downstream sides of the control apparatus 10 are always in communication with each other. The constant differential pressure valve 20 is, as shown in fig 5, comprised of a communicating bore 21 which provides communication between the valve chest 15 and the return duct 4, a slide valve 22 disposed so as to close the communicating bore 21, and a coil spring 23 biasing the slide valve 22 toward the valve chest 15 from the return duct side so as to close the communicating bore 21. The reference numeral 24 denotes an O-ring for sealing.

When the pressure of engine cooling water inside the valve chest 15 which is always in communication with the supply duct inlet 3a exceeds the biasing force from the coil spring 23, the slide valve 22 moves against the coil spring 23 to open the communicating bore 21, so that engine cooling water flows into the return duct 4 directly from the valve chest 15. As a result, the difference between the pressure of engine cooling water inside the valve chest 15 and the pressure of engine cooling water coming out of the radiator 2 and flowing through the return duct 4 is mantained at a constant level.

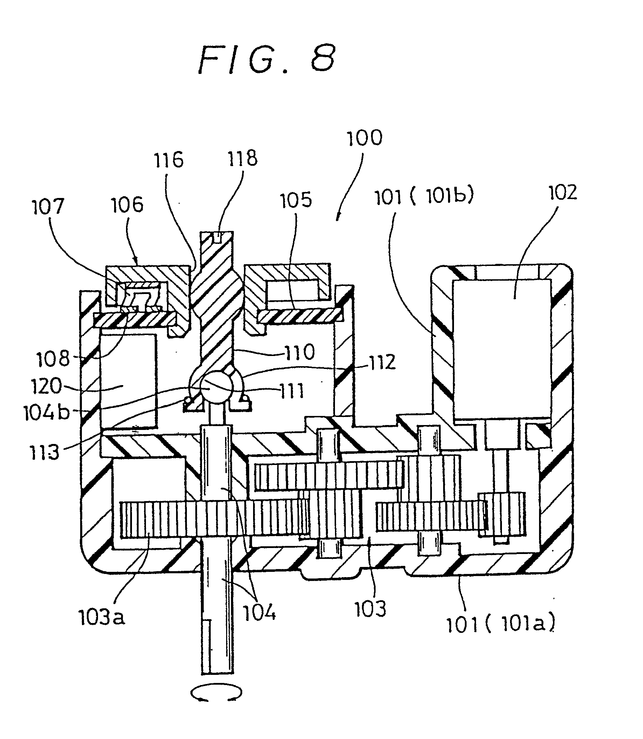

Fig 8 shows the structure of the motor actuator 100. Referring to fig 8, the reference numeral 101 denotes a casing which serves as the frame and outer cover of the motor actuactor 100. The casing 101 comprises two separable parts 101a and 101b. In the casing 101 is disposed a motor 101 which is rotatable back and forth by a DC power supply. The rotation of the motor 102 is reduced through a reduction gear train 103. A shaft 104 that is formed integral with the final stage gear 103a of the reduction gear train 103 is defined as an output shaft. The output shaft 104 is rotatably supported by two portions of the casing 101 which face each other across the gear 103a. The rotating shaft 12 of the valve member 11 is coupled to the output shaft 104 so as to rotate together with it in one unit.

The reference numeral 105 denotes a board printed with an electrical circuit and secured to the casing 101. The reference numeral 106 denotes a potentiometer part which has an electrically conductive brush 107 secured to the lower side thereof and which is rotatably supported on the printed board 105. The printed circuit 105 has a resistor 108 secured thereto in such a manner that the resistor 108 is in contact with the brush 107 at all times. Thus the position (angle) of rotation of the potentiometer part 106 is detected from the contact relationship between the brush 107 and the resistor 108.

The centre of rotation of the potentiometer part 106 is coaxial with the centre of rotation of the output shaft 104. However, the bearing of the potentiometer part 106 and that of the output shaft 104 are formed at different positions.

There may therefore be some eccentricity between the centres of rotation of these two members due to, for example, errors in manufacture.

The potentiometer part 106 and the output shaft 104 are therefore coupled together through a pivotable rotation transmission shaft 110.

The inner projecting end portion 104b of the output shaft 104 has a spherical convex configuration. On the other hand, the inner end of the transmission shaft 110 has a spherical recess 111 which is complementary to the spherical end portion 104b of the output shaft 104. The end portion of the transmission shaft 110 is provided with a plurality (four, for example) of slits 112 extendig from the edge of the opening at this end. The mouth of the rotation transmission shaft 110 is resiliently clamped from the outer side by means of a metallic C-ring 113. Accordingly, the end portion of the rotation transmission shaft 110 presses upon the end portion of the output shaft 104 that is wrapped therein, thus causing strong frictional resistance to occur in the area of contact between these two engaged end portions.

Accordingly, the rotation transmission shaft 11 is capable of pivoting in any direction, over 360 |, with respect to the output shaft 104. In normal use, the rotation of the output shaft 104 is transmitted to the rotation transmission shaft 110, so that these two shafts rotate together in the same direction. However, at the time of adjustment during assembling, for example, the shafts 104 and 110 can be rotated relative to each other so as to change the positional relationship therebetween.

The potentiometer part 106 has a substantially rectangular bore 116 provided in the centre thereof so that the rotation of the transmission shaft 110 fitted into the bore 116 is transmitted to the potentiometer part 106. Accordingly, the rotation of the output shaft 104 is transmitted to the potentiometer part 106 through the rotation transmission shaft 110, and the position (angle) of rotation of the output shaft 104 is detected in the potentiometer part 106. Even if there is some eccentricity between the output shaft 104 and the potentiometer part 106, rotation of the output shaft 104 is smoothly transmitted to the potentiometer part 106 without any resistance through the rotation transmission shaft 110 which transmits rotation while effectively pivoting relative to the potentiometer part 106 and the output shaft 104.

At the time of adjustment during assembly or the like, with the output shaft 104 fixed, the rotation transmission shaft 110 is forced to rotate with a screw driver inserted into a slit 118 provided in the outer end of the shaft 110. In consequence, the rotation transmission shaft 110 slips relative to the output shaft 104, thus enabling the positional relationship between the output shaft 104 and the potentiometer part 106 to be changed as desired.

The reference numeral 120 denotes a control circuit for controlling the operation of the motor actuator 100, which is provided within the motor actuator 100.

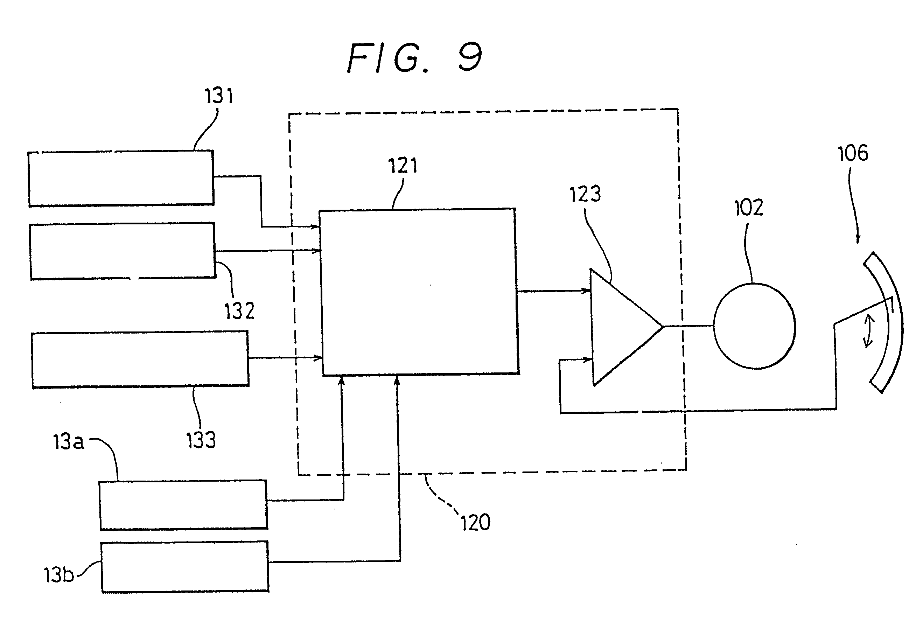

Fig 9 shows one example of the circuit for controlling the quantity of radiated heat in the heater according tothis embodiment. In the figure, the reference numeral 131 denotes an outside air temperature sensor for detecting the outside air temperature, 132 an inside air temperature sensor for detecting the air temperature in the passenger compartment, and 133 an indoor temperature setting circuit for setting an indoor temperature. Output signals from the sensor 131, 132 and the circuit 133 are inputted to a valve opening determining circuit 121 incorporated in the control circuit 120, and a signal indicative of the edetermined opening of the valve member 11 is outputted from the valve opening determining circuit 121 to a comparator 123.

In the comparator 123, the input signal is compared with an angle detecting signal obtained in the potentiometer part 106 to control the rotation of the motor 102, thereby automatically controlling the opening of the valve member 11. As a result, the flow rate of engine cooling water passing through the radiator 2 is changed, so that the quantity of heat radiated from the radiator 2 into the passenger compartment is controlled.

In this embodiment, the constant differential pressure valve 20 is provided, as described above.

Accordingly, the flow rate of engine cooling water passing through the radiator 2 is kept proportional to the opening of the valve member 11 independently of variations in the rotational speed of the engine 1. Thus, the quantity of heat radiated from the radiator 2 can be controlled in a stable state. Assuming that the flow rate of engine cooling water passing through tha radiator 2 is Q, the inlet water temperature is T1 and the outlet water temperature is T2, the quantity of heat radiated is expressed by Q (T1-T2). In this embodiment, the flow rate Q is readily obtained from the set pressure of the constant differential pressure valve 20 and the opening of the valve member 11 (i.e., the angle detecting signal obtained in the potentiometer part 106).

Accordingly, if detecting signals from the inlet and outlet thermistors 13a and 13b are utilized to determine an opening for the valve member 11 in the valve opening determining circuit 121, it is possible to calculate a precise quantity of heat radiated and therefore control the opening of the valve member 11 even more finely and precisely by controlling the operation of the motor actuator 100 on the basis of the quantity of radiated heat thus calculated.

Although in the aforedescribed embodiment, the valve member 11 is provided in the supply duct 11 at the inlet side of the radiator 2, it may be provided in the return duct 12 at the outlet side of the radiator 2.

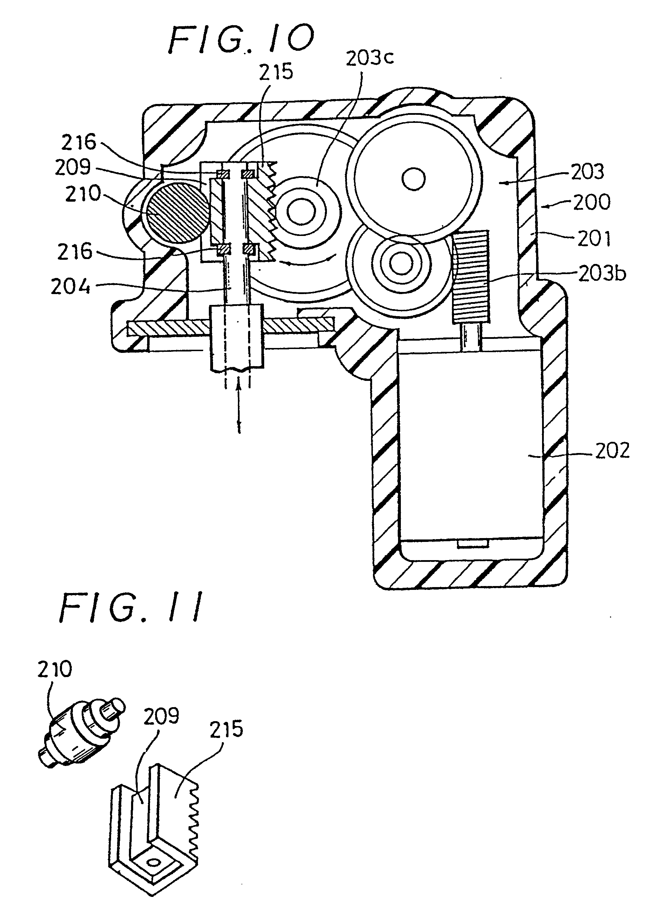

Figs 10 and 11 shows in combination a second embodiment of the present invention which employs a motor actuator 200 having an output shaft 204 which performs reciprocatinglinear motion. In this embodiment, the operation of a slide valve (not shown), instead of a rotary valve, is controlled by the motor actuator 200, thereby controlling the flow rate of engine cooling water.

Referring to fig 10, the reference numeral 201 denotes a casing, and 202 a reversible DC motor. A worm 203b which is meshed with a reduction gear train 203 is secured to the output shaft of the motor 202 so that the rotation of the motor 202 is reduced through the reduction gear train 203.

It should be noted that in fig 10 the teeth of the gears constituting the reduction gear train 203 are schematically shown.

The reference numeral 215 denotes a rack secured to the output shaft 204 by means of E-rings 216, which is meshed with a pinion 203c constituting the final stage of the reduction gear train 203.

The back of the rack 215 is provided with a guide groove 209 having a predetermined width which extends along the direction of movement of the rack 215. A pulley 210 which is rotatably supported on the casing 201 is engaged with the guide groove 209 to support the rack 215 from the back thereof.

By virtue of the above described arrangement, the rack 215 is driven by the motor 202 through the reduction gear train 203 to perform reciprocating linear motion within thecasing 201, thus causing the output shaft 204 to perform reciprocating linear motion. In fig 10, illustration of the associated electrical parts is omitted.

According to the present invention, the duct through which engine cooling water circulates is opened and closed by means of a motor actuator which is driven by an electric motor. It is therefore possible to effect fine and precise control of the quantity of radiated heat with ease and with a simple structure in comparison with the prior art.

Since a constant differential pressure valve is provided to maintain at a constant level the difference between the pressure at the inlet side of the valve member and the radiator and the pressure at the outlet side thereof, the flow rate of engine cooling water passing through the radiator is kept proportional to the opening of the valve and it is therefore possible to effect considerably precise control of the quantity of radiated heat. Since the quantity of radiated heat can be precisely calculated by detection of the temperature of engine cooling water at each of the inlet and outlet sides of the radiator, it is possible to effect even more delicate and precise control by utilizing the information concerning the engine cooling water temperature.

In addition, it is possible to form the control apparatus in a very compact structure by disposing the duct system between the valve member and the motor actuator or incorporating in the motor actuator the control circuit for controlling the operation of the motor actuator.

engine circulates and a radiator (2) connected to an intermediate portion of the duct to radiate heat into the passenger compartment, characterized in that it comprises :
    – a valve member (11) for opening and closing said duct (3) for controlling the flow rate of engine cooling water passing through said radiator ; and
    – a motor actuator (100) driven by an electric motor to control the operation of said valve member (11).

2. A control apparatus as in claim 1, wherein said duct (3) is disposed between said valve member (11) and said motor actuator (100).

3. A control apparatus as in claim 1 or 2, further comprising a control circuit for controlling the operation of said motor actuator (100) incorporated in said motor actuator.

4. A control apparatus as in claim 1, 2 or 3, further comprising a constant differential pressure valve (20) for maintaining at a constant level the difference between the pressure of engine cooling water in the duct at the inlet side of said valve member (11) and said radiator (2) and the pressure of engine cooling water in the duct at the outlet side thereof.

5. A control apparatus as in claim 1, 2, 3 or 4 further comprising inlet temperature detecting means (13a) for detecting the temperature of engine cooling water entering said radiator and outlet temperature detecting means (13b) for detecting the temperature of engine cooling water coming out of said radiator, such that the operation of said motor actuator is controlled on the basis of output signals from said inlet and outlet temperature detecting means.

## Claims

1. A control apparatus for controlling the quantity of heat radiated from a car heater having a duct (3) through which engine cooling water heated in the

FIG. 1

FIG. 2

# FIG.3

# FIG. 4

# FIG. 5

# FIG. 6

# FIG. 7

# FIG. 8

# FIG. 9

# FIG. 10

# FIG. 11